Europäisches Patentamt

European Patent Office

Office européen des brevets

(19)

(11) Veröffentlichungsnummer: **0 162 431**
**B1**

(12)

# EUROPÄISCHE PATENTSCHRIFT

(45) Veröffentlichungstag der Patentschrift:
18.05.88

(21) Anmeldenummer: **85106153.1**

(22) Anmeldetag: **20.05.85**

(51) Int. Cl.⁴: **A 01 D 41/08**

(54) **Erntebergungsmaschine.**

(30) Priorität: **21.05.84 US 612518**

(43) Veröffentlichungstag der Anmeldung:
**27.11.85 Patentblatt 85/48**

(45) Bekanntmachung des Hinweises auf die Patenterteilung:
**18.05.88 Patentblatt 88/20**

(84) Benannte Vertragsstaaten:
**DE FR GB IT**

(56) Entgegenhaltungen:
**GB-A-655 330**
**US-A-1 379 112**
**US-A-2 495 417**

(73) Patentinhaber: **DEERE & COMPANY, 1 John Deere Road, Moline Illinois 61265 (US)**

(72) Erfinder: **West, Neil L., 6914 Valley Drive, Bettendorf Iowa 52722 (US)**
Erfinder: **Thomas, Kenneth Ray, 4538 11th Avenue B, Moline Illinois 61265 (US)**
Erfinder: **Lundahl, Ezra Cordell, 710 N. 6th West RFD Box 258, Logan Utah 84321 (US)**

(74) Vertreter: **Feldmann, Bernhard, DEERE & COMPANY European Office, Patent Department Steubenstrasse 36- 42 Postfach 503, D-6800 Mannheim 1 (DE)**

## Beschreibung

Die Erfindung bezieht sich auf eine Erntebergungsmaschine mit einem auf einer Erntebergungsvorrichtung vorgesehenen Abstreifrotor zum Abstreifen bzw. Herauslösen von Erntegut aus zumindest dem oberen Teil des stehenden Getreides mit einer horizontal verlaufenden Welle, auf der zahlreiche scheibenartige Abstreifelemente nebeneinander angeordnet sind, die aus einer auf einer Nabe mittig und radial angeordneten Radscheibe gebildet sind auf der beiderseits zahlreiche Rippen angeordnet sind, die axial von der Radscheibe abstehen und sich von der Nabe bis zum Außenumfang der Radscheibe erstrecken, wobei sich die Außenkanten der Rippen ausgehend vom Außenumfang der Radscheibe in Richtung der Kelle erstrecken, um einen V-förmigen Aufnahmeschlitz mit benachbarten Rippen einer angrenzenden Radscheibe zu bilden.

Es ist bereits eine Erntebergungsmaschine bekannt (US-A-2 495 417), die aus einer horizontal verlaufenden, der zur Fahrtrichtung der Erntebergungsmaschine angeordneten Welle mit zahlreichen scheibenartigen Abstreifelementen gebildet ist, die die Ähren von stehendem Getreide erfassen und diese abstreifen bzw. das Erntegut aus den Ähren herauslösen, um es dann einer Fördervorrichtung und einer sich daran anschließenden Reinigungsvorrichtung zuzuführen. Die einzelnen Abstreifelemente bestehen aus einzelnen Radscheiben, an denen sich axial erstreckende Rippen angeordnet sind. Die Rippen sind mit Bezug auf die Oberfläche der Radscheibe keilförmig ausgebildet, so daß sie mit benachbarten Rippen einer angrenzenden Radscheibe einen V-förmigen Aufnahmeschlitz bilden, in den die Ähren hineinbewegt werden, so daß sie dann an der Berührungsstelle zweier gegenüberliegender Rippen erfaßt werden und abgerennt werden können. Durch die V-förmige Ausbildung des Aufnahmeteils zweier nebeneinander liegender Abstreifelemente wird lediglich der Teil der Ähren erfaßt, der bis an die Berührungsstelle der einander gegenüberliegenden Rippen geführt wird. Die nachfolgenden Rippen können dabei teilweise wieder aus dem Einzugsbereich der Abstreifelemente herausgeführt werden, so daß keine einwandfreie gleichmäßige Ernte des stehenden Getreides möglich ist.

Demgegenüber liegt der Erfindung die Aufgabe zugrunde, die Abstreifelemente derart auszubilden und anzuordnen, daß alle in den Einzugsbereich der Abstreifelemente geführten Ähren vollständig erfaßt und abgetrennt werden, ohne daß das Erntegut oder die Ähren aus dem Einzugsbereich der Abstreifelemente wieder herausbewegt werden. Diese Aufgabe ist dadurch gelöst worden, daß jede Rippe eine von ihrer Außenkante ausgehende, parallel zur Radscheibe verlaufende Kante aufweist, die bezüglich der Stirnfläche der Nabe zurückgesetzt ist, so daß sie mit der zugehörigen Kante der Rippe auf der benachbarten Radscheibe einen Zwischenraum bildet, der bis an die Nabe der Radscheibe reicht und zur Aufnahme der Halme von Erntegut dient und verhindert, daß die das Erntegut bzw. Saatgut enthaltenden Ähren oder das Erntegut durch den Spalt zurückbewegt werden. Durch die Schaffung eines Spaltes zwischen den einzelnen Abstreifelementen bzw. Rippen, die auf den Radscheiben angeordnet sind, können mehrere hintereinander stehende Ähren von zwei Radscheiben ohne weiteres erfaßt werden, so daß entweder die Ähren abgetrennt oder das Erntegut aus den Ähren herausgelöst werden kann, ohne daß dabei die Ähren sich durch den gegenüberliegenden Zwischenraum von zwei Rippen hindurch bewegen. Hierzu ist es gemäß der Erfindung vorteilhaft, daß die Kanten von zwei auf einer Querebene auf der Radscheibe angeordneten Rippen von der Nabe ausgehend parallel verlaufen und dann in Richtung des Außenumfangs der Radscheibe zu einer Spitze V-förmig zusammenlaufen, daß die Rippen mit annähernd gleichem Abstand auf der Radscheibe angeordnet sind und daß die Rippe auf der einen Seite der Radscheibe auf der gleichen sich axial erstreckenden Querebene liegt wie die Rippe auf der anderen Seite der Radscheibe. Durch den länglichen Spalt, der durch die parallel verlaufenden Kanten der zusammenwirkenden Rippen gebildet wird, und durch die V-förmige Erweiterung des Spaltes im Bereich des Außenumfanges der Radscheibe wird ein großer Teil der stehenden Ähren von dem Spalt erfaßt und verhindert, daß bei Aufnahme der Halme in dem Spalt die Ähren durch den Spalt hindurchrutschen. Da die einzelnen Rippen einen gleichen Abstand untereinander aufweisen, wird eine kontinuierliche Ernte des Getreides mittels der beiden Scheiben gewährleistet. Hierzu können die Rippen der einen Radscheibe gegenüber der benachbarten Rippe auf der nächstliegenden Radscheibe um einige Winkelgrade versetzt sein. Durch das Hintereinander-Auftreffen der Kanten auf die Ähren werden diese erheblich erschüttert, so daß ein Herauslösen der Körner erfolgt und diese durch die Rippen erfaßt werden, um dann der Reinigungsvorrichtung zugeführt zu werden.

In weiterer Ausgestaltung der Erfindung ist es vorteilhaft, daß zumindest die Radscheibe des Abstreifelementes aus einem elastomeren, beispielsweise gummiartigen, Material besteht und daß eine jede Rippe aus einem sich radial erstreckenden, sich an die Nabe anschließenden Teil und einem abgebogenen oder in etwa hakenförmig ausgebildeten Teil besteht. Da zumindest die Radscheibe aus einem verformbaren Material, beispielsweise aus Plastik oder auch aus Gummi, ausgebildet sein kann, hält sie größeren Belastungen stand, insbesondere dann, wenn sie auf Hindernisse auftrifft. Es ist jedoch auch möglich, das gesamte Abstreifelement aus einem verformbaren Material herzustellen. Durch das Abbiegen der Rippen in Drehrichtung wird die Aggressivität der Rippen beim Erntevorgang erhöht, während durch Zurückbiegen der Rippen mit Bezug auf die Drehrichtung die Aggressivität der Rippen verringert wird. Hierzu ist es vorteilhaft, daß der sich radial erstreckende Teil und der abgebogene Teil der Rippe einen in Umlaufrichtung offenen stumpfen Winkel bilden und daß der sich radial erstreckende und der sich daran anschließende, abgebogene Teil der Rippe einen entgegengesetzt zur Umlaufrichtung offenen stumpfen Winkel bilden. Vorteilhaft ist es ferner, daß die Radscheibe an ihrem Außenumfang zwischen den einzelnen Rippen sägenförmig-ähnliche Einbuchtungen aufweist und daß beiderseits auf der Radscheibe zusätzliche kurze Rippen angeordnet sind, die mit ihrem einen Ende an den Außenumfang der Radscheibe heranreichen und mit ihrem anderen Ende mit Abstand zur Nabe angeordnet sind. In weiterer Ausgestaltung der Erfindung ist es vorteilhaft, daß auf der Radscheibe abwechselnd eine kurze und eine lange Rippe angeordnet sind, wobei die lange Rippe sich zwischen dem Außenumfang und der Nabe der Radscheibe erstreckt, und daß die langen Rippen mit Bezug auf die Nabe und die geometrische Verlängerung der kurzen Rippen tangential an die Nabe herangeführt sind. Außerdem ist es vorteilhaft, daß der im Bereich des Außenumfangs liegende Teil der langen Rippe mit Bezug auf die Drehrichtung des Abstreifelementes entweder nach vorne oder nach hinten abgewinkelt ist, daß mit Bezug auf die Drehrichtung des Abstreifelementes und die durch die Achse verlaufende Längsebene die kurzen Rippen nach vorne und die langen Rippen nach hinten geneigt verlaufend angeordnet sind und daß zwei auf einer durch die Welle verlaufenden Längsebene liegende Rippen mit Bezug auf die Drehrichtung des Abstreifelementes nach vorne oder nach hinten V-förmig verlaufend angeordnet sind. Vorteilhaft ist es ferner, daß der Außenumfang der Radscheibe jeweils zwischen zwei nebeneinander liegenden Rippen durch eine geradlinig verlaufende Kante gebildet ist, daß die Oberfläche der Rippen mit der Radscheibe einen rechten Winkel bildet und daß die Abstreifelemente einzeln oder gemeinsam in Gruppen mittels der Welle vertikal schwenkbar gelagert sind und die Schwenkbewegung der Abstreifelemente mittels eines Zugmitteltriebs der Antriebsvorrichtung für die Abstreifelemente begrenzt werden kann. Durch die vertikale verschwenkbarkeit der einzelnen Abstreifelemente besteht die Möglichkeit, daß diese bei größer auftretenden Hindernissen ohne weiteres nach oben ausweichen können, um somit eine Beschädigung der Abstreifelemente zu vermeiden.

Im folgenden wird die Erfindung anhand von mehrere Ausführungswege darstellenden Zeichnungen erläutert. Es zeigt:

Fig. 1 eine Seitenansicht der Erntebergungsvorrichtung einer Saatguterntemaschine,

Fig. 2 eine Draufsicht der Erntegutmaschine,

Fig. 3 eine Schnittdarstellung des Reinigungsteils im Schnitt entlang der Linie 3 - 3 gemäß Fig. 2,

Fig. 4 eine perspektivische Darstellung eines Teils der vorderen Plattform der Erntebergungsvorrichtung mit den zugehörigen Erntebergungselementen,

Fig. 5 eine perspektivische Darstellung des Abstreifrotors im größeren Maßstab,

Fig. 6 eine Seitenansicht eines weiteren Ausführungsbeispiels eines Abstreifelementes,

Fig. 7 eine Schnittdarstellung der Erntebergungselemente entlang der Linie 7 - 7 gemäß Fig. 6, wobei die Abstreifelemente in ausgezogenen Linien dargestellt sind,

Fig. 8 und 9 weitere Ausführungsbeispiele für die Abstreifelemente,

Fig. 10 eine Seitenansicht eines vierten Ausführungsbeispiels für ein Abstreifelement,

Fig. 11 ein fünftes Ausführungsbeispiel für ein Abstreifelement,

Fig. 12 eine Frontansicht des Abstreifelementes gemäß Fig. 11,

Fig. 13 eine Teilansicht des Abstreifelementes gemäß Fig. 11 entlang der Linie 13 - 13,

Fig. 14 eine schematische Darstellung des Abstreifelementes, bevor die Ähren von den Abstreifelementen erfaßt werden,

Fig. 15 eine ähnliche Ansicht wie in Fig. 14, jedoch mit anderen Abstreifelementen.

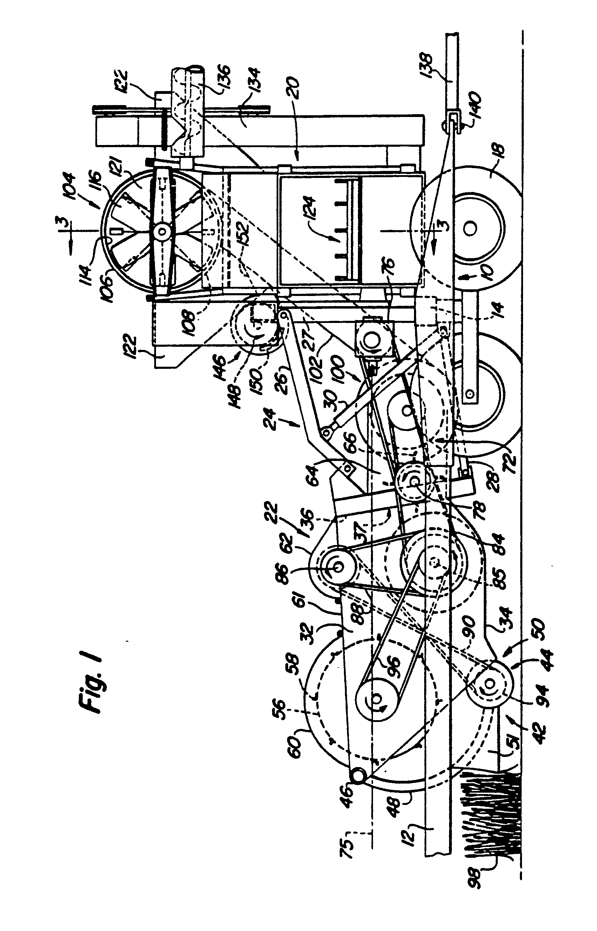

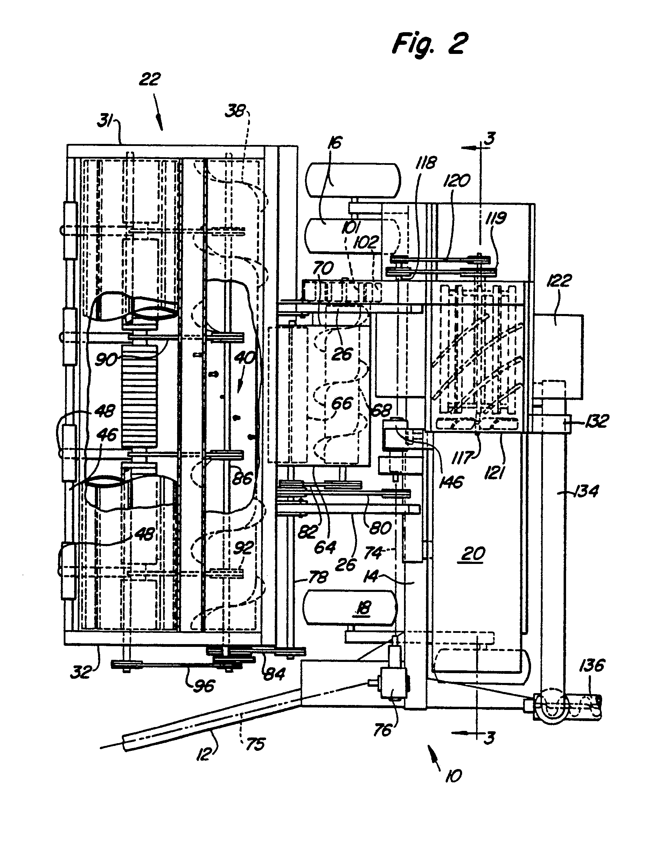

In der Zeichnung ist in den Figuren 1 und 2 eine Erntebergungsmaschine dargestellt, die mit einem L-förmig ausgebildeten Hauptrahmen 10 ausgerüstet ist, an dessen linker Seite eine Anhängevorrichtung 12 und an dessen rückwärtiger Seite ein Querträger 14 vorgesehen ist. Am hinteren rechten Teil des Hauptrahmens 10 befinden sich zwei Laufräder 16 und auf der linken Seite zwei versetzt zueinander angeordnete Laufräder 18. Das vordere Ende der Anhängevorrichtung 12 kann an einen in der Zeichnung nicht dargestellten Schlepper angeschlossen sein, wobei eine in der Anhängevorrichtung 12 gelagerte Welle 75 mit der Zapfwelle des Schleppers antriebsverbindbar ist.

Auf dem Querträger 14 ist ein quer verlaufendes Reinigungsgehäuse 20 angeordnet, das sich über die gesamte Breite des Querträgers 14 erstreckt. Am vorderen Ende des Querträgers 14 befindet sich ebenfalls eine sich über die gesamte Breite der Maschine erstreckende Erntebergungsvorrichtung 22, die mittels einer Tragvorrichtung an der Maschine vertikal verstellbar gelagert ist. Zur Tragvorrichtung gehören zwei sich parallel nach vorne erstreckende obere Lenker 26, die mit ihren vorderen Enden gelenkig an den oberen hinteren Teil der Erntebergungsvorrichtung 22 und mit ihren hinteren Enden gelenkig an das obere Ende je eines Trägers 27 angeschlossen sind, der auf der rechten bzw. auf der linken Seite der Maschine am Querträger 14 befestigt ist. Die Tragvorrichtung 24 weist ferner zwei mit Abstand zueinander angeordnete, sich nach vorne erstreckende Lenker 28 auf, die unterhalb der Lenker 26 liegen, wobei das jeweilige vordere Ende des Lenkers 28 an den unteren hinteren Teil der Erntebergungsvorrichtung 22 und das jeweilige hintere Ende des Lenkers 28 an den Querträger 14 gelenkig angeschlossen ist. Jeweils ein geneigt verlaufender Hydraulikzylinder 30 ist mit seinem oberen Ende im Bereich der vorderen Anschlußstelle an der Erntebergungsvorrichtung an den oberen Lenker 26 und mit seinem unteren Ende an eine Lasche des Querträgers 14 angeschlossen. Durch Ausfallen der Kolbenstange des Hydraulikzylinders 30 wird die Erntebergungsvorrichtung 22 aus einer Stellung gemäß Fig. 1 so weit auf eine bestimmte konstante Höhe angehoben, daß das Erntegut mittels der Erntebergungsvorrichtung geerntet werden kann.

Die Erntebergungsvorrichtung 22 weist ein rechtes Seitenpaneel 31 und ein linkes Seitenpaneel 32 sowie einen horizontal verlaufenden Boden auf, der sich zwischen den aufrecht stehenden, gegenüberliegenden Seitenpaneelen 31 und 32 erstreckt. Der Boden ist an seinem hinteren Ende nach oben abgebogen und geht in eine hintere aufrecht stehende Rückwand 36 über, in der sich eine mittlere Durchlaßöffnung 37 zum Passieren des Erntegutes befindet.

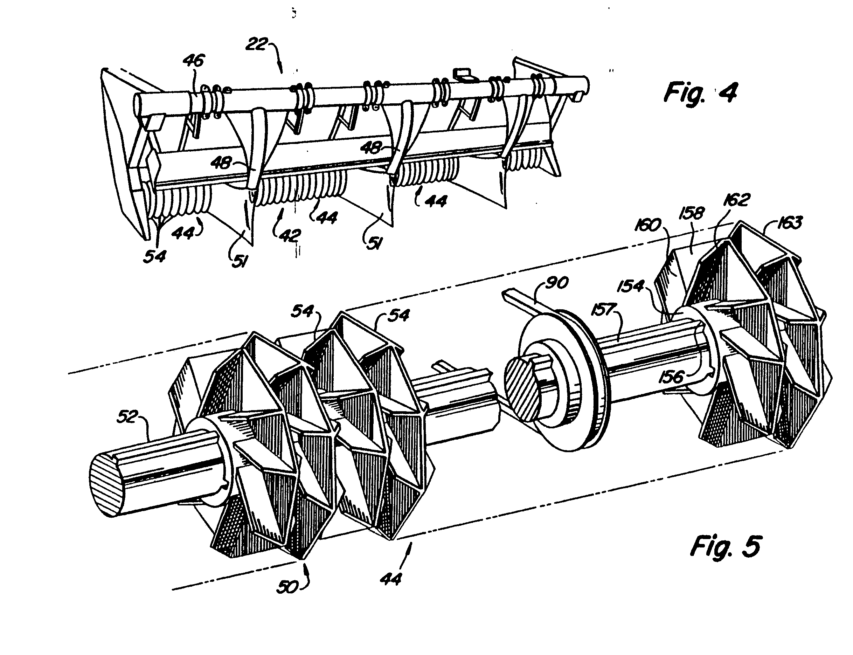

Vor der Rückwand 36 ist in der Erntebergungsvorrichtung 22 eine quer verlaufende Förderschnecke 38 vorgesehen, die sich zwischen den Seitenpaneelen 31 und 32 erstreckt und die im mittleren Bereich Förderzinken 40 aufweist, die unmittelbar vor der Durchlaßöffnung 37 liegen und mittels derer das von der Förderschnecke erfaßte Erntegut nach hinten durch die Durchlaßöffnung 37 geleitet wird. Die Erntebergungsvorrichtung 22 ist ferner mit einer Abstreifvorrichtung 42 ausgestattet, die sich im Bereich des vorderen Endes des Bodens 34 zwischen den Seitenpaneelen 31 und 32 erstreckt. Die Abstreifvorrichtung 42 ist mit mehreren einzelnen Abstreifelementen 44 ausgestattet, die nach oben hin ausweichen können, wenn beispielsweise die Erntebergungsvorrichtung 22 bzw. die Abstreifelemente auf ein Hindernis auftreffen. Wie aus den Figuren 1 und 2 hervorgeht, weist die Abstreifvorrichtung 42 vier unabhängig voneinander arbeitende Abstreifelemente 44 auf, während die Erntebergungsvorrichtung gemäß Fig. 4 drei Abstreifelemente aufweist. Die Abstreifelemente 44 sind dicht nebeneinander angeordnet und decken somit die gesamte Breite der Erntebergungsvorrichtung 22 ab. Ein jedes Abstreifelement hängt mittels halbkreisförmig gebogener Tragarme 48 an einem oberen quer verlaufenden, sich zwischen den Seitenpaneelen 31 und 32 erstreckenden Rohrträger 46 und ist unabhängig von den benachbarten Abstreifelementen 44. Die an den Rohrträger 46 gelenkig angeschlossenen Tragarme erstrecken sich mit ihren unteren Enden nach hinten und dienen zur Aufnahme eines Abstreifrotors 50, der aus den einzelnen Abstreifelementen 44 gebildet ist. Zwischen mehreren zu einer Gruppe zusammengefaßten Abstreifelementen 44 befinden sich in Fahrtrichtung sich erstreckende Halmteiler 51, die das untere Ende der Tragarme 48 umgeben, und zwar in einem Bereich, der vor der Anschlußstelle des Tragarmes 48 und einer Welle 52 des Abstreifrotors 50 liegt, so daß die Abstreifer die einzelnen Halme vor den Tragarmen 48 teilen und sie den zahlreichen Abstreifscheiben 54 zuführen, die nebeneinander auf der Welle 52, beispielsweise mit einem Keil, befestigt sind. Die einzelnen Ausführungsformen der einzelnen Abstreifscheiben 54 sind nachfolgend näher erläutert.

Die in den Figuren 1 und 2 beschriebene Erntebergungsvorrichtung weist eine relativ große obere Trommel 56 auf, die sich oberhalb der Abstreifelemente 44 befindet und sich zwischen den Seitenpaneelen 31 und 32 erstreckt. Die zylinderförmig ausgebildete Trommel 56 weist einen relativ großen Durchmesser auf, ist mit einer Welle 52 ausgestattet und weist an ihrem Umfang quer verlaufende Rippen 58 auf, die sich von der Trommel 56 radial nach außen erstrecken.

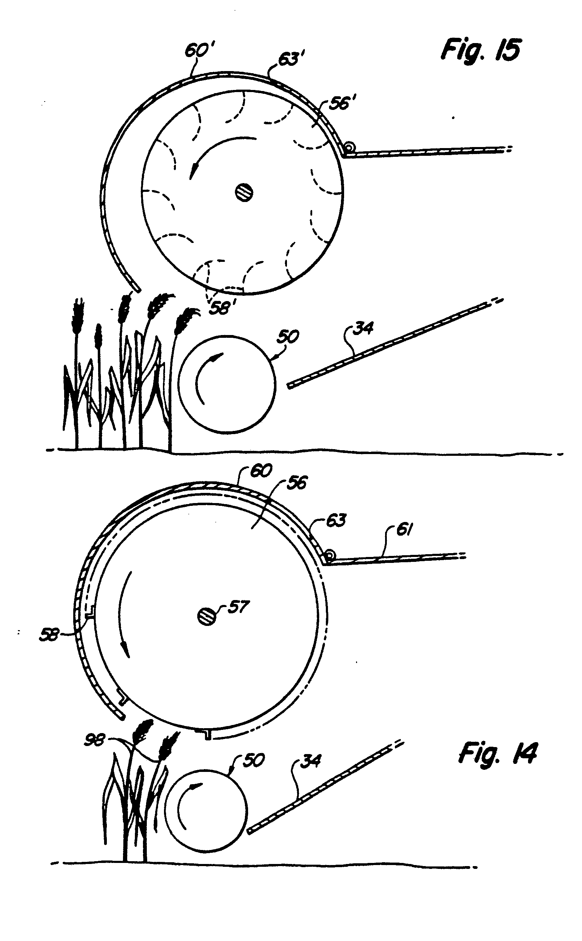

Die einzelnen Rippen haben eine relativ geringe radiale Höhe und können beispielsweise aus Winkelstahl hergestellt sein. Eine kreisförmig ausgebildete Haube 60 deckt den oberen Teil der Trommel 56 ab und verläuft in etwa koaxial zur Trommel 56. Die Haube 60 überspannt die gesamte Breite der Erntebergungsvorrichtung 22 und ist mittels eines quer verlaufenden Gelenkes an die Erntebergungsvorrichtung 22 angeschlossen, so daß die Haube 60 nach oben geschwenkt werden kann, um der Bedienungsperson einen Zugang zum vorderen Teil der Erntebergungsvorrichtung 22 zu ermöglichen. Ein oberes Paneel 61 erstreckt sich zwischen den gegenüberliegenden Paneelen 31 und 32 unmittelbar hinter der Haube 60. Eine weitere Haube 62 liegt hinter der hinteren Kante des Paneels 61 und dem oberen Ende der Rückwand 36. Die hintere Haube 62 ist ebenfalls konkav ausgebildet, nach unten gerichtet und an dem Paneel schwenkbar angeschlossen, so daß sie nach oben geklappt werden kann, um einen besseren Zugang zur Förderschnecke 38 zu erhalten, die unterhalb der hinteren Haube 62 liegt. Wie insbesondere aus Fig. 14 hervorgeht, ist die vordere Haube 60 mit Lufteinlaßöffnungen 63 ausgestattet, die nebeneinander liegen und sich im Bereich der Gelenkstelle der Haube über ihre ganze Breite erstrecken. Die obere Trommel 56 dreht sich in Pfeilrichtung gemäß Fig. 14, und die Rippen 58 der Trommel 56 erzeugen einen Luftstrom, so daß Luft durch die Lufteinlaßöffnungen 63 eintritt und im Bereich der unteren Kante der Haube 60 aus der Haube wieder austritt.

Eine weitere Ausbildungsform der oberen Trommel ist in Fig. 15 veranschaulicht. Die Trommel 56' ist mit konkav ausgebildeten Förderblättern 58' ausgestattet, wie sie beispielsweise bei Gebläserädern üblich sind. Die Trommel 56' wird mittels einer Haube 60' abgedeckt, die mit Bezug auf die Trommel exzentrisch angeordnet ist, so daß im vorderen Bereich zwischen der Haube 60' und dem Rotor 56' ein größerer Spalt gebildet wird, der in Umfangsrichtung gesehen nach vorne hin zunimmt. Die Haube 60' ist ebenfalls mit Lufteinlaßöffnungen 63' ausgestattet. Die in Fig. 15 dargestellte Trommel erzeugt einen erheblich größeren Anteil von Luft, wobei der hieraus resultierende Luftstrom auf die noch stehenden Ähren auftrifft, um diese dem Abstreifrotor 50 zuzuführen.

Das hinter der Wand 36 liegende Fördergehäuse 64 steht mit der Durchlaßöffnung 37 in Verbindung und dient zur Aufnahme einer Schlagleistentrommel 66, die zwischen den Seitenwänden des Fördergehäuses 64 angeordnet ist, im vorderen Bereich des Fördergehäuses 64 vorgesehen ist und mit den Zinken zusammenwirkt. Eine quer verlaufende Förderschnecke 68 befindet sich hinter der Schlagleistentrommel 66 im Fördergehäuse 64 und fördert das von der Schlagleistentrommel 66 erfaßte Erntegut seitlich zur rechten Seite des Fördergehäuses 64 durch eine Auslaßöffnung 70 in der rechten Seite des Fördergehäuses 64.

Der Abstreifrotor 50, die Trommel 56, die Förderschnecke 38 und die Schlagleistentrommel 66 drehen sich alle gemäß Pfeil in Fig. 1 und werden über ein Zugmittelgetriebe angetrieben, das mit der Nummer 72 bezeichnet ist. Das Zugmittelgetriebe 72 steht mit einer Welle 74 in Antriebsverbindung, die über ein Winkelgetriebe 76 mit der in der Anhängevorrichtung 12 vorgesehenen Welle 75 antriebsverbunden ist. Das vordere Ende der Welle 75 ist mit der Zapfwelle eines in der Zeichnung nicht dargestellten Schleppers antriebsverbunden. Die Welle 74, die als Hauptantriebswelle zu bezeichnen ist, steht ferner über einen Riementrieb 80 mit der Antriebswelle der Erntebergungsvorrichtung 22 in Antriebsverbindung. Die Antriebswelle 78 ist an der Rückseite der Erntebergungsvorrichtung 22 gelagert und dient zum Antrieb der Schlagleistentrommel 66. Neben dem Riementrieb 80 befindet sich ein zweiter Riementrieb 82, der die Antriebswelle 78 mit der Welle der Förderschnecke 68 verbindet. Ein dritter Riementrieb 84 am linken Ende der Antriebswelle 78 treibt eine quer verlaufende Welle 85 an, die mit der Welle der Förderschnecke 38 antriebsverbunden ist, und ferner eine Gegenwelle 86 mittels eines Riementriebes 88. Die Gegenwelle 86 erstreckt sich über die gesamte Breite der Erntebergungsvorrichtung 22 unterhalb der Haube 62. Ein Riementrieb 90 verbindet die Gegenwelle 86 mit der Welle 52 des Abstreifrotors 50. Ein jeder Abstreifrotor 50 weist eine obere Antriebsscheibe 92 auf, die auf der Gegenwelle 86 angeordnet ist, sowie eine untere Antriebsscheibe 94, die auf der Welle 52 angeordnet ist. Ein Riementrieb 96 verbindet ferner die Welle 85 mit der Trommel 56.

Die Ähren des noch stehenden Erntegutes 98 (siehe Fig. 1), die noch Saatgut enthalten, befinden sich oberhalb der Achse des unteren Abstreifrotors 50 und unterhalb der Achse der Trommel 56. Die Frontseite des Abstreifrotors 50 wird nach oben bewegt, so daß die Abstreifscheiben 54 die Ähren des stehenden Erntegutes erfassen und diese nach oben ziehen bzw. nach oben ausrichten. Die Trommel 56 unterstützt die rückwärtige Bewegung des ausgeschiedenen Ernte- bzw. Saatgutes zur Förderschnecke 38, die das Erntegut zur Mitte der Erntebergungsvorrichtung 22 zusammenzieht und es nach hinten durch die Durchlaßöffnung 37 bewegt. Das durch die Durchlaßöffnung 37 bewegte Erntegut wird dann von der Schlagleistentrommel 66 erfaßt, die die Förderschnecke 68 beaufschlagt, die wiederum das Erntegut seitlich in das Fördergehäuse durch eine Auslaßöffnung abgibt und es einem Gebläseförderer 100 zuführt, der auf der rechten Seite des Fördergehäuses vorgesehen ist. Der Gebläseförderer 100 weist ein Gebläserad 101 auf, das das Erntegut erfaßt und es tangential nach hinten und oben durch einen Förderkanal 102 einem rotierenden Vorreiniger 104 im Reinigungsgehäuse 20 zuführt. Der Förderkanal 102 ist teleskopisch ausziehbar, um der vertikalen Verstellbarkeit der Erntebergungsvorrichtung 22 mit Bezug auf das Reinigungsgehäuse 20 angepaßt zu werden, das fest mit dem Hauptrahmen 10 verbunden ist.

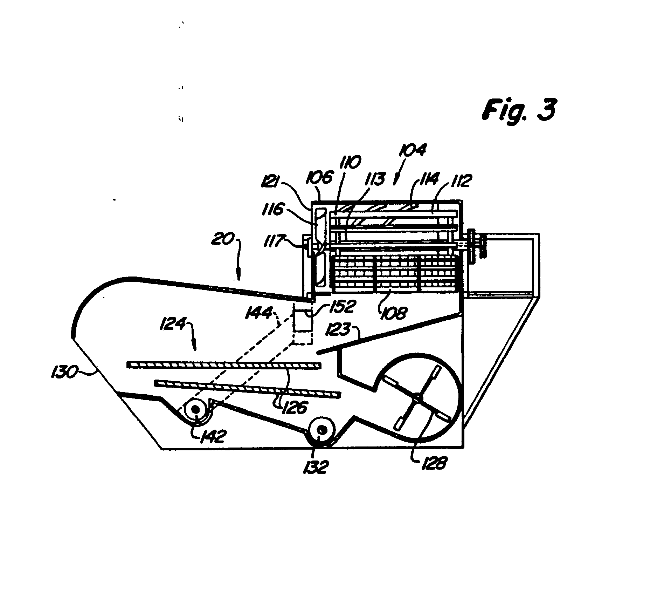

Der Vorreiniger 104 weist ein zylindrisches Gehäuse 106 auf, das mit Bezug auf die Fahrtrichtung der Erntebergungsmaschine quer verlaufend angeordnet ist. Die untere Hälfte des Gehäuses 106 besteht aus einem halbkreisförmig ausgebildeten Sieb 108, durch das das gereinigte Erntegut treten kann, wobei jedoch das Stroh bzw. die Kaffanteile weitgehend zurückgehalten werden. Der Förderkanal 102 steht mit dem Einlaßende des Gehäuses 106 in Durchflußverbindung. In dem Gehäuse 106 ist ein Reinigungsrotor 110 vorgesehen, der das Erntegut über die gesamte Länge des Gehäuses 106 erfaßt. Der Reinigungsrotor 110 weist zahlreiche sich axial erstreckende Blätter 112 auf, die auf einer Welle 113 angeordnet sind. Die Blätter 112 bewegen sich dicht an der Innenseite des Gehäuses 106 entlang und bewegen das Erntegut an der Innenseite des Gehäuses über das Sieb 108 entlang. Am inneren oberen Teil des Gehäuses 106 befinden sich Führungsrippen 114, die auf das Erntegut einwirken, wenn es an der Innenseite des Gehäuses entlang bewegt wird und es der Austragöffnung am Ende des Gehäuses 106 zugeführt wird (siehe linke Seite in Fig. 3). Ein Sauggebläserad 116 ist auf einer Welle 117 angeordnet, die sich koaxial zur Welle 113 erstreckt. Das Sauggebläserad 116 wird mit einer höheren Geschwindigkeit angetrieben als der Rotor 110, die beide über eine quer verlaufende Welle 118 angetrieben werden, die mit der Welle 74 antriebsverbunden ist. Die Welle 117 steht über einen Riementrieb 120 mit der Welle 118 in Antriebsverbindung, und die Welle 113 steht über einen Riementrieb 119 mit der Welle 118 in Antriebsverbindung.

Das Sauggebläserad 116 ist am linken Ende des Gehäuses 106 im Bereich der Auslaßöffnung 121 angeordnet. Eine nach oben gerichtete Lufteinlaßöffnung 122 umgibt das Sieb 108, so daß die Luft über die Einlaßöffnung in das Gehäuse 106 gesaugt werden kann und radial durch die Sieböffnungen des Siebes 108 gelangt und dann durch die Auslaßöffnungen 121 wieder austritt. Das schwerer wiegende Korn fällt durch die Öffnungen des Siebes 108 nach unten auf eine geneigt verlaufende Pfanne 123, während das leichtere Stroh und die Kaffanteile über den Luftstrom durch die Auslaßöffnung gelangen. Das Erntegut und das andere Material, das mit diesem vermischt ist, gleiten über die Pfanne 123 zur Reinigungsvorrichtung 124 (siehe Fig. 3), die im Reinigungsgehäuse 20 vorgesehen ist. Die Reinigungsvorrichtung 124 weist zwei schwingend gelagerte Reinigungssiebe 126 und ein Gebläse 128 auf, das die Siebe 126 mit Reinigungsluft beaufschlagt und somit die Kaffanteile der Auslaßöffnung 130 zuführt. Dabei fällt das schwerer wiegende Erntegut, beispielsweise das Saatgut, durch die Öffnungen der Siebe 126. Das im vorderen Bereich durch die Sieböffnungen der Siebe 126 tretende Erntegut wird einer Reinigungsschnecke 132 zugeführt, die das gereinigte Erntegut nach hinten einem Elevatorförderer 134 zuführt, von dem das Erntegut zu einer höher liegenden, verschwenkbaren Förderschnecke 136 gelangt. Die Förderschnecke 136, die als Austragfördervorrichtung bezeichnet werden kann, fördert das Erntegut zu einem an die Erntebergungsmaschine angeschlossenen Ladefahrzeug, wobei in Fig. 1 lediglich die Anhängevorrichtung 138 des Ladefahrzeuges angedeutet ist. Die Anhängevorrichtung 138 ist an eine Anhängekupplung 140 angeschlossen, die am hinteren Ende des Hauptrahmens 10 vorgesehen ist.

Das schwerere Material, das am linken oder rechten Ende der Reinigungsvorrichtung 124 herunterfällt und als Überkehr bezeichnet wird, wird von einer Überkehrschnecke 142 erfaßt, die die Überkehr einem Überkehrelevator 144 zuführt, der sich nach oben erstreckt und seitlich an der Frontseite des Reinigungsgehäuses 20 angeordnet ist. Von dem Überkehrelevator gelangt die Überkehr zu einer Nachdrescheinrichtung 146, zu der ein kleiner Dreschzylinder 148 und ein Dreschkorb 150 gehören. Das nachgedroschene Erntegut wird tangential durch einen sich nach oben und hinten erstreckenden Förderkanal 152 geleitet, von dem dann das Erntegut auf den vorderen Bereich der Reinigungsvorrichtung 124 fällt und dann dort erneut behandelt wird.

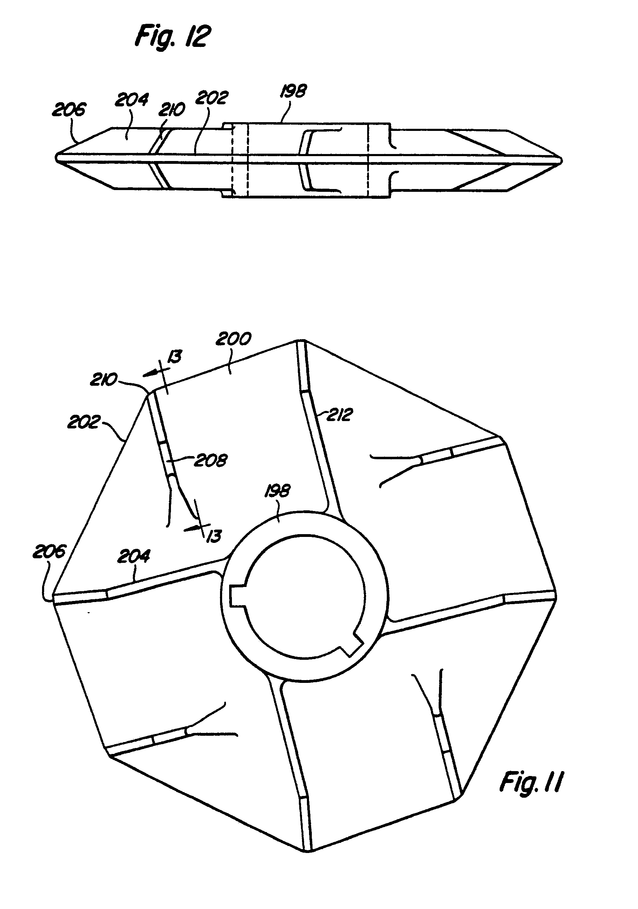

Wie aus Fig. 5 hervorgeht, sind auf der Welle 52 zahlreiche Abstreifscheiben 54 nebeneinander angeordnet. Die mittleren Abstreifscheiben sind zur besseren Darstellung des Antriebes der Einfachheit halber weggelassen. Die Abstreifelemente sind untereinander gleich, so daß lediglich eins näher beschrieben ist. Das Abstreifelement 44 weist eine Nabe 154 mit zwei mit Abstand zueinander angeordneten, sich axial erstreckenden Nuten 156 zur Aufnahme von zwei auf der Welle 52 angeordneten Keilen 157 auf, die sich über die gesamte Länge der Welle 52 erstrecken. Bei der Montage der einzelnen Abstreifscheiben 54 auf der Welle 52 kann infolge der beiden Nuten 156 die Ausrichtung der einzelnen Scheiben untereinander variiert werden, so daß, wie aus Fig. 5 hervorgeht, die eine Abstreifscheibe 54 zur benachbarten Abstreifscheibe etwas versetzt ist. Eine jede Abstreifscheibe weist an der Nabe eine sich radial erstreckende Scheibe 158 auf, an denen zahlreiche mit Abstand zueinander angeordnete, sich axial erstreckende Rippen 160 vorgesehen sind. Die einzelnen Rippen sind geneigt verlaufend angeordnet und bilden mit der zugehörigen Radialebene einen nach außen offenen spitzen Winkel. Die einzelnen Rippen sind beiderseits der Scheibe 150 spiegelbildlich angeordnet. Die außenliegende Kante der Rippe 160 ist mit 162 bezeichnet und läuft mit Bezug auf die Achse der Welle 52 geneigt nach innen, so daß die beiden gegenüberliegenden Rippen 160 (ähnlich wie in Fig. 12) eine Pfeilspitze bilden. Die einzelnen Abstreifscheiben 54 sind so dicht nebeneinander auf der Welle 52 angeordnet, daß die einzelnen Naben 154 gegeneinander anliegen, wobei die gegenüberliegenden, sich radial nach außen erstreckenden Kanten der Rippen 160 einen schmalen Spalt bilden. Wie aus Fig. 5 ferner hervorgeht, sind die Rippen 160 tangential an die Nabe 154 herangeführt. Die zwischen den einzelnen Rippen liegende Kante 163 ist gerade bzw. als Sekante ausgebildet, so daß man eine achtseitige Scheibe 158 erhält, auf der acht Rippen 160 angeordnet sind.

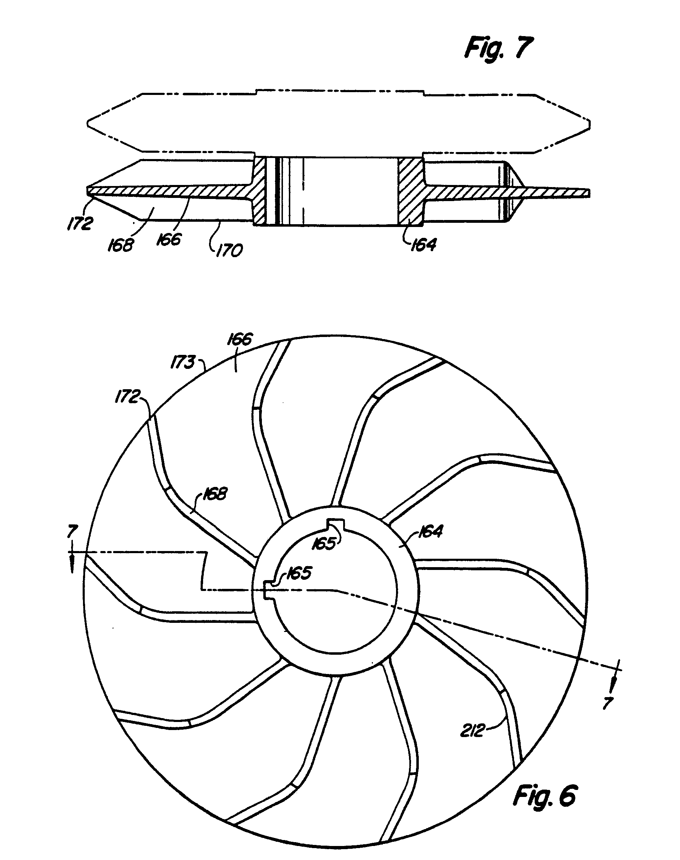

In den Figuren 6 und 7 ist ein weiteres Ausführungsbeispiel einer Scheibe 166 dargestellt, die sich in einzelnen Merkmalen von der Scheibe 158 unterscheidet. Die Scheibe 166 ist ebenfalls auf einer Nabe 164 angeordnet, in der sich zwei sich axial erstreckende, mit Abstand zueinander angeordnete Nuten 165 befinden, so daß ebenfalls die einzelnen Abstreifscheiben auf der Welle 52 gestaffelt angeordnet werden können. Die Abstreifscheibe gemäß Fig. 6 und 7 weist auf ihrer Scheibe 166 ebenfalls zahlreiche sich radial erstreckende Rippen 168 auf, die an der Peripherie bzw. dem Kreisumfang der Scheibe 166 enden. Die Rippe 168 wird durch zwei sich radial erstreckende Kanten 170 begrenzt, die mit Bezug auf die Stirnfläche der Nabe 164 etwas zurückgesetzt sind (siehe Fig. 7). Somit bilden die gegenüberliegenden Kanten 170 bei Montage der Abstreifscheibe auf der Welle 52 und bei Anlage der einzelnen Naben 154 einen schmalen Spalt. Der äußere Teil der Rippe 168 ist, wie aus Fig. 6 hervorgeht, etwas abgewinkelt und bildet einen hakenförmigen Teil 172. Wie aus Fig. 6 ferner hervorgeht, ist der hakenförmige Teil 172 in Drehrichtung etwas bogenförmig ausgebildet und endet an der Peripherie 173. Die Scheibe 166 ist im Gegensatz zur Scheibe 158 kreisförmig ausgebildet.

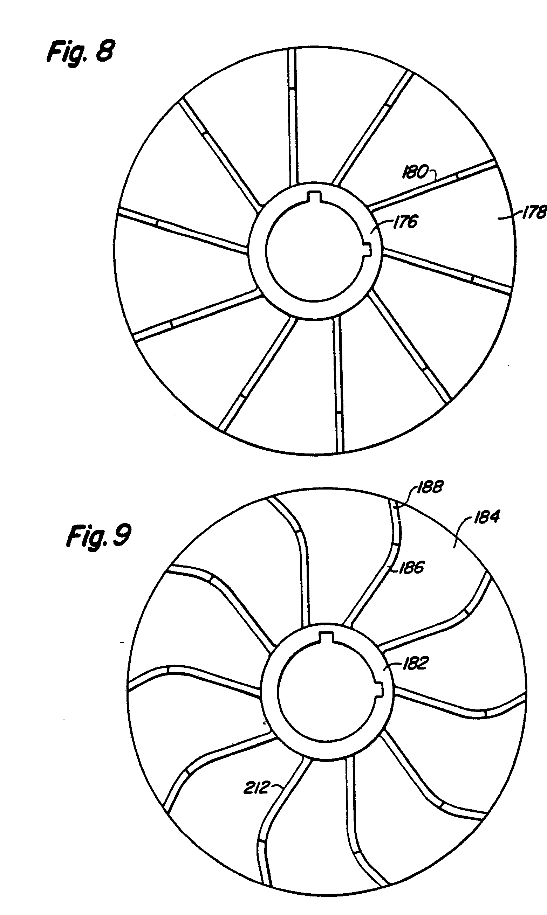

Ein weiteres Ausführungsbeispiel ist in den Figuren 8 und 9 veranschaulicht. Die Abstreifscheibe gemäß Fig. 8 und 9 weist ebenfalls eine zylinderförmige Nabe 176 auf, auf der eine Scheibe 178 koaxial angeordnet ist. Auf der Scheibe 178 sind sich radial erstreckende Rippen 180 angeordnet, die den Rippen gemäß Fig. 5 entsprechen. Wie aus Fig. 9 hervorgeht, sind die Scheibe 184 und die zugehörige Nabe 182 gleich der Scheibe 178 und der Nabe 176 gemäß Fig. 8. Jedoch sind im Ausführungsbeispiel gemäß Fig. 9 die Rippen 186 mit einem abgebogenen bzw. hakenförmigen Teil 188 versehen, der in etwa dem hakenförmigen Teil 172 gemäß Fig. 6 entspricht, wobei jedoch der hakenförmige Teil 188 in entgegengesetzter Richtung, und zwar entgegengesetzt zur Drehrichtung, abgebogen ist, so daß der gewölbte Teil des hakenförmigen Teils 188 in Drehrichtung zeigt (siehe Fig. 9).

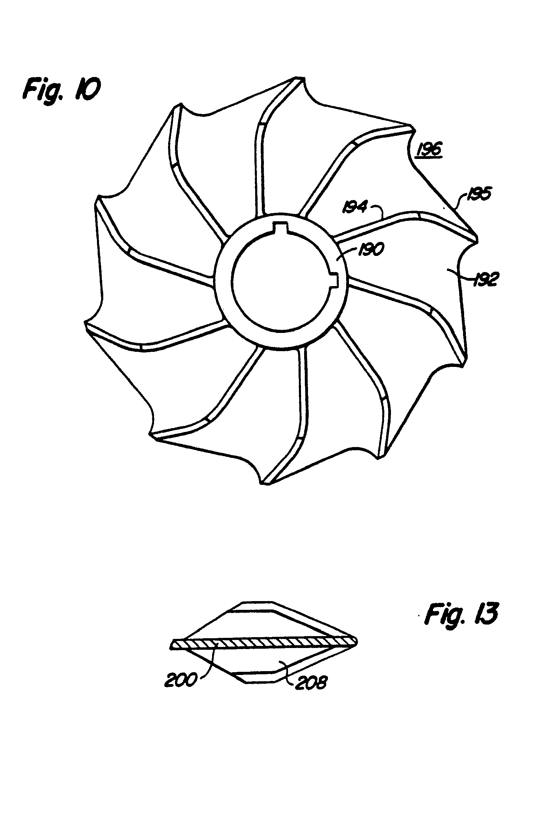

Ein fünftes Ausführungsbeispiel ist in Fig. 10 veranschaulicht, wobei die Abstreifscheibe ebenfalls aus einer zylinderförmigen Nabe 190 und einer Scheibe 192 besteht. Die kreisförmige Scheibe 192, die koaxial auf der Nabe 190 angeordnet ist, weist ebenfalls zahlreiche Rippen 194 auf, die den Rippen in Fig. 6 entsprechen und ebenfalls einen abgebogenen bzw. hakenförmigen, in Umfangsrichtung zeigenden Teil aufweisen. Die Rippen erstrecken sich ebenfalls bis in Umfangsrichtung bzw. zur Peripherie 195 der Scheibe 192. Die Scheibe 192 ist in Form einer Kreissäge ausgebildet und weist hierzu zahlreiche Einbuchtungen 196 auf, die zwischen den äußeren Enden der Rippen 194 vorgesehen sind.

Das letzte Ausführungsbeispiel ist in den Figuren 11 bis 13 veranschaulicht. Das Abstreifelement besteht ebenfalls aus einer Scheibe 200, die auf einer zylinderförmigen Nabe 198 angeordnet ist. Auf der Scheibe 200 sind acht mit Abstand zueinander angeordnete Rippen 204, 208 und 212 angeordnet. Die zwischen den einzelnen Rippen stehende Kante 202 ist als Sekante, d. h. geradförmig, ausgebildet. Die Rippen 204 und 212 erstrecken sich von der Nabe 198 radial nach außen zur Kante 202 und enden an dem Schnittpunkt der nebeneinander liegenden, einander schneidenden Kanten 202. Die Enden der Rippen 204 bzw. 212 weisen einen im Querschnitt V-förmigen Teil 206 auf. Der V-förmige Teil verläuft zur Schnittstelle der beiden Kanten 202 zusammen. Wie aus Fig. 11 hervorgeht, erstrecken sich die Rippen 204 und 212 tangential an die Nabe 198 heran. Ferner sind die Rippen 204 und 212 mit Bezug auf die Drehrichtung der Abstreifscheibe nach hinten geneigt verlaufend angeordnet. Die Rippen 208 sind kürzer und bilden mit der Kante 202 einen rechteckigen Winkel, wobei das innenliegende Ende mit Abstand zur Nabe 198 angeordnet ist und seine geometrische Verlängerung sich tangential an der Nabe 198 vorbei erstreckt. Die Rippe 208 erstreckt sich ebenfalls bis zur Kante 202 und weist einen V-förmigen Teil 210 auf, der dem V-förmigen Teil 206 der Rippe 204 entspricht. Wie aus Fig. 11 hervorgeht, können die V-förmigen Teile 206 der größeren Rippen 204 in Drehrichtung etwas abgewinkelt sein.

Im Arbeitseinsatz wird die Erntebergungsmaschine über das Feld gezogen und durch das Getreide 98 gefahren (siehe Fig. 1). Die Höhe der Erntebergungsvorrichtung 22 wird so eingestellt, daß das Saatgut bzw. Korn, das in den Ähren enthalten ist, oberhalb der Achse des Abstreifrotors 50, jedoch unterhalb der Achse der Trommel 56 gemäß Fig. 1 liegt. Der Abstreifrotor 50 wird im Uhrzeigerdrehsinn angetrieben, so daß die Frontseite des Rotors gemäß Fig. 1 und 14, 15 sich nach oben bewegt. Dabei dreht die obere Trommel im entgegengesetzten Uhrzeigerdrehsinn, so daß die Frontseite der Trommel 56 sich nach unten bewegt. Die Rippen 58 der oberen Trommel 56 ziehen über die Lufteinlaßöffnungen 63 Luft an, so daß ein Luftstrom zwischen die obere Trommel 56 und den Abstreifrotor 50 geleitet wird. Die Luft tritt nach hinten und unten an der Auslaßöffnung der Haube 60 wieder aus. Der in der Haube 60 erzeugte Luftstrom ist auf das stehende Getreide gemäß Fig. 14 gerichtet, so daß die Ähren an ihren Halmen sich in Richtung des Abstreifrotors 50 neigen. Der Luftstrom unterstützt auch die Förderbewegung des Saatgutes, das aus den Ähren herausgelöst worden ist. Ferner unterstützt der Luftstrom eine Bewegung des Erntegutes entlang dem Boden 34 in Richtung der Förderschnecke 38, die das Erntegut zusammenzieht und es nach hinten in das Fördergehäuse 64 abgibt.

Bei gewissen Getreidearten ist es wünschenswert, ein größeres Luftvolumen zu erzeugen und dieses nach unten und hinten auszurichten und somit auf die Ähren zu leiten und dadurch die Bewegung des ausgeschiedenen Saatgutes oder der Ähren selbst zur Förderschnecke 38 zu begünstigen. Die als Gebläse ausgebildete Trommel 56' gemäß Fig. 15 mit ihren zugehörigen Rippen 58' erzeugt den gewünschten größeren Luftstrom.

Die Abstreifvorrichtung 42 weist drei oder mehrere unabhängig voneinander arbeitende Abstreifelemente 44 auf, die unabhängig voneinander aufgehängt sind und angetrieben werden, so daß ein jedes Abstreifelement 44 frei nach hinten schwingen kann, unabhängig von den anderen Abstreifelementen, wenn diese beispielsweise auf ein Hindernis auftreffen oder wenn der Boden recht uneben ist. Die einzelnen Abstreifelemente 44 bilden den entsprechenden Abstreifrotor 50. Die Abstreifelemente 44 bestehen aus zahlreichen Abstreifscheiben 54, die nebeneinander auf der Welle 52 (siehe Fig. 5) angeordnet sind. Wie bereits ausgeführt, ist jede Scheibe 54 auf einer entsprechenden Nabe angeordnet. Von der Scheibe 54 erstrecken sich zahlreiche Rippen 160 in radialer Richtung.

Die in der Beschreibung und in den Zeichnungen erläuterten Abstreifscheiben können weiterhin abgewandelt werden. Der Abstand zwischen den benachbarten Rippen von zwei Abstreifscheiben gestattet, daß die Halme des Getreides 98 zwischen den Scheiben aufgenommen werden, wobei gleichzeitig verhindert wird, daß die Ähren mit dem Saatgut, die in den durch die Rippen gebildeten Taschen aufgenommen sind, bei vorwärts drehendem Rotor aus den Taschen herausgleiten. Die Aufnahme bzw. das Einwirken der Rippen auf die Ähren erfolgt in Längsrichtung der Halme, und zwar in Richtung der Ähren. werden die Abstreifelemente mit einer entsprechenden Geschwindigkeit angetrieben, so wird das Saatgut bzw. Erntegut aus den Ähren herausgetrieben und mittels der tangentialen Kräfte sowie durch den Luftstrom, der durch die Trommel 56 erzeugt wird, zur Förderschnecke 38 gefördert. Dieser aggressive Abstreifvorgang führt auch dazu, daß ein Teil der Ähren mit abgetrennt wird, der dann dem ausgeschiedenen Erntegut bzw. Saatgut beigemischt und zur Förderschnecke 38 bewegt wird. Die in den Figuren 6 und 7 dargestellten Abstreifscheiben weisen einen außenstehenden abgewinkelten Teil 172 auf, der die Form eines leicht gekrümmten Hakens aufweist und in Drehrichtung abgewinkelt ist.

Die als Abstreifwerkzeuge ausgebildeten Rippen gemäß Fig. 9 sind dagegen mit Bezug auf die Drehrichtung nach hinten abgewinkelt, so daß hierdurch eine etwas weniger aggressive Ernte- bzw. Dreschwirkung erzielt wird. Die in Fig. 8 dargestellten Rippen 180 erstrecken sich mit Bezug auf die Nabe 176 radial nach außen. Diese Rippen liegen in ihrer Wirkung zwischen der Wirkung der Rippen gemäß Fig. 7 und 9. Die Rippen 194 der Abstreifscheiben gemäß Fig. 10 weisen zwischen den äußeren Enden der Rippen auf der Kante der Scheibe 192 eine Einbuchtung 196 auf. Mit einem derartigen Erntewerkzeug wird eine weniger aggressive Ernte durchgeführt.

Die Abstreifscheiben 54 können beispielsweise aus Gußaluminium oder einem ähnlichen Material hergestellt werden, um somit das Gewicht der Erntebergungsvorrichtung 22 zu reduzieren. Es ist jedoch auch möglich, die Abstreifscheiben aus einem entsprechenden Gummi herzustellen, die zwar nicht so aggressiv sind wie die zuvor beschriebenen Abstreifscheiben, jedoch den Vorteil bieten, daß sie sich bei Arbeiten auf unebenem bzw. steinigem Boden leichter verformen können bzw. Schläge absorbieren, die beim Erntevorgang auf felsigem bzw. steinigem Boden auftreten können. Es hat sich herausgestellt, daß Gummikomponenten bei einer Shore-Härte zwischen 70 und 90 zu zufriedenstellenden Ergebnissen führen, wobei, je geringer die Härte dieser aus Gummi hergestellten Abstreifscheiben ist, auch die Erntewirkung der Abstreifscheiben um so geringer ist. Je elastischer also die Abstreifscheiben sind, desto besser können sie auch den Schlägen widerstehen bzw. diese absorbieren, wenn die Scheiben auf Steine oder dergleichen auftreffen. Eine bessere Erntewirkung wird jedoch bei härteren, aus Gummi hergestellten Scheiben erzielt. Jedoch können derartige Scheiben leichter brechen bzw. entzweigehen.

Die Abstreifscheiben können einen Durchmesser von ca. 30 cm aufweisen, wobei die Abstreifrotoren mit einer Drehzahl von 1 350 bis 1 820 Umdrehungen pro Minute angetrieben werden.

Bei relativ hohen Geschwindigkeiten ist der Abstreifvorgang aggressiver, wobei der Erntegutverlust sogar bei sehr schwierig zu erntendem Erntegut geringer ist. Jedoch wird bei relativ hohen Drehzahlen mehr von dem übrigen Material abgetrennt als das eigentliche Erntegut, so daß zwar relativ kleine Erntegutverluste auftreten, jedoch die Reinigungsvorrichtung stärker belastet wird. Ferner werden bei Verwendung der aggressiveren Abstreifscheiben kleinere Erntegutverluste erzielt, jedoch werden ebenfalls mehr Ähren bzw. Halmteile erfaßt, so daß die Reinigungsvorrichtung ebenfalls stärker belastet wird als mit den weniger aggressiven Abstreifscheiben.

Es ist auch möglich, die obere Trommel 56 zu eliminieren (siehe Fig. 4), so daß hierdurch der Leistungsbedarf beim Erntevorgang reduziert werden kann, da die lufterzeugende Trommel einen relativ großen Antriebsbedarf hat. Die Entfernung der oberen Trommel 56 oder der Antrieb der oberen Trommel mit einer geringeren Umfangsgeschwindigkeit, also weniger als 400 bis 500 Umdrehungen pro Minute bei einer 0,78 m großen Trommel, vergrößert die Erntegutverluste.

Das von der Erntebergungsvorrichtung geerntete Saatgut sowie die Kaff- bzw. Ährenanteile, die beim Abstreifvorgang mit abgetrennt werden, werden nach hinten zur Förderschnecke 38 geleitet und dann dem Fördergehäuse 64 aufgegeben, das mit der Förderschnecke 68 ausgerüstet ist, die das Erntegut seitlich dem Gebläseförderer 100 zuführt. Der Gebläseförderer leitet dann das Erntegut zu dem Vorreiniger 104, der das meiste in dem Erntegut enthaltene Stroh bzw. die Kaffanteile entfernt und es dann der Reinigungsvorrichtung 124 zuführt. Die Reinigungsvorrichtung ist mit einer Aufsammelvorrichtung für gereinigtes Erntegut und mit einer Vorrichtung zur Aufnahme der Überkehr ausgerüstet, die die Überkehr erneut der Nachdrescheinrichtung 146 zuführt, um sie dann wieder der Reinigungsvorrichtung 124 zuzuleiten. Die Erntebergungsmaschine mit der beschriebenen Abstreifvorrichtung nimmt weit weniger Kaffanteile auf als konventionelle Erntebergungsmaschinen, da die Abstreifelemente die Ähren und insbesondere die Halme weitgehend auf dem Feld zurücklassen. Die Abstreifelemente ersetzen die sonst üblichen Dreschzylinder und Trennvorrichtungen, wie sie bei konventionellen Mähdreschern üblich sind. Das abgestreifte Saatgut bzw. Erntegut sowie die übrigen Kaffanteile werden dann lediglich noch mittels der Reinigungsvorrichtung voneinander getrennt. Die Fahrtgeschwindigkeit der Erntebergungsmaschine mit der Abstreifvorrichtung ist wesentlich höher als bei konventionellen Erntemaschinen, die mit einem hin- und hergehenden Schneidwerksbalken ausgerüstet sind. Somit ist eine Erntebergungsmaschine mit Abstreifelementen wesentlich effektiver, wenn es für Saatgut eingesetzt wird. Somit ist eine Erntebergungsmaschine mit Abstreifelementen bei Erntegut, das nicht so dicht steht, effektiver, so daß eine derartige Maschine nicht mit der relativ hohen Geschwindigkeit arbeiten muß, um die volle Kapazität der Maschine zu nutzen. Die Erntebergungsmaschine mit den Abstreifelementen ist insbesondere auf trockenem Land sehr geeignet, und zwar dort, wo das Erntegut nicht so dicht steht und relativ niedrig ist. Dabei ist es auch vorteilhaft, wenn die Ähren auf annähernd gleicher Höhe stehen.

**Patentansprüche**

1. Erntebergungsmaschine mit einem auf einer Erntebergungsvorrichtung (22) vorgesehenen Abstreifrotor (50) zum Abstreifen bzw. Herauslösen von Erntegut aus zumindest dem oberen Teil des stehenden Getreides (98) mit einer horizontal verlaufenden Welle (52), auf der zahlreiche scheibenartige Abstreifelemente (44) nebeneinander angeordnet sind, die aus einer auf einer Habe (154) mittig und radial angeordneten Radscheibe (158) gebildet sind, auf der beiderseits zahlreiche Rippen (160) angeordnet sind, die axial von der Radscheibe abstehen und sich von der Nabe (154) bis zum Außenumfang der Radscheibe erstrecken, wobei sich die Außenkanten (172) der Rippen ausgehend vom Außenumfang der Radscheibe in Richtung der Welle erstrecken, um einen V-förmigen Aufnahmeschlitz mit benachbarten Rippen einer angrenzenden Radscheibe zu bilden, dadurch gekennzeichnet, daß jede Rippe (160) eine von ihrer Außenkante ausgehende, parallel zur Radscheibe verlaufende Kante aufweist, die bezüglich der Stirnfläche der Nabe zurückgesetzt ist, so daß sie mit der zugehörigen Kante der Rippe auf der benachbarten Radscheibe einen Zwischenraum bildet, der bis an die Habe der Radscheibe reicht und zur Aufnahme der Halme von Erntegut dient und verhindert, daß die das Erntegut bzw. Saatgut enthaltenden Ähren oder das Erntegut durch den Spalt zurückbewegt werden.

2. Erntebergungsmaschine nach Anspruch 1, dadurch gekennzeichnet, daß die Kanten (162) von zwei auf einer Querebene auf der Radscheibe (158) angeordneten Rippen (160) von der Nabe (154) ausgehend parallel verlaufen.

3. Erntebergungsmaschine nach Anspruch 2, dadurch gekennzeichnet, daß die Rippen (160) mit annähernd gleichem Abstand auf der Radscheibe (158) angeordnet sind und daß die Rippe auf der einen Seite der Radscheibe auf der gleichen sich axial erstreckenden Querebene liegt wie die Rippe auf der anderen Seite der Radscheibe.

4. Erntebergungsmaschine nach einem oder mehreren der vorherigen Ansprüche, dadurch gekennzeichnet, daß die Rippen (160) der einen Radscheibe (158) gegenüber der benachbarten Rippe auf der nächstliegenden Radscheibe um einige Winkelgrade versetzt sind.

5. Erntebergungsmaschine nach einem oder mehreren der vorherigen Ansprüche, dadurch gekennzeichnet, daß zumindest die Radscheibe (158) des Abstreifelementes (44) aus einem elastomeren, beispielsweise gummiartigen, Material besteht.

6. Erntebergungsmaschine nach einem oder mehreren der vorherigen Ansprüche, dadurch gekennzeichnet, daß eine jede Rippe (186) aus einem sich radial erstreckenden, sich an die Nabe (164) anschließenden Teil und einem abgebogenen oder in etwa hakenförmig ausgebildeten Teil (172) besteht.

7. Erntebergungsmaschine nach Anspruch 6, dadurch gekennzeichnet, daß der sich radial erstreckende Teil und der abgebogene Teil der Rippe (194) einen in Umlaufrichtung offenen stumpfen Winkel bilden.

8. Erntebergungsmaschine nach den Ansprüchen 6 und 7, dadurch gekennzeichnet, daß der sich radial erstreckende und der sich daran anschließende, abgebogene Teil (188) der Rippe (186) einen entgegengesetzt zur Umlaufrichtung offenen stumpfen Winkel bilden.

9. Erntebergungsmaschine nach einem oder mehreren der vorherigen Ansprüche, dadurch gekennzeichnet, daß die Radscheibe (192) an ihrem Außenumfang zwischen den einzelnen Rippen (194) sägenförmig-ähnliche Einbuchtungen (196) aufweist.

10. Erntebergungsmaschine nach einem oder mehreren der vorherigen Ansprüche, dadurch gekennzeichnet, daß beiderseits auf der Radscheibe (200) zusätzlich kurze Rippen (208) angeordnet sind, die mit ihrem einen Ende an den Außenumfang der Radscheibe heranreichen und mit ihrem anderen Ende mit Abstand zur Nabe (198) angeordnet sind.

11. Erntebergungsmaschine nach Anspruch 10, dadurch gekennzeichnet, daß auf der Radscheibe (200) abwechselnd eine kurze und eine lange Rippe (208, 204) angeordnet sind, wobei die lange Rippe (204) sich zwischen dem Außenumfang und der Nabe (198) der Radscheibe (200) erstreckt.

12. Erntebergungsmaschine nach Anspruch 10, dadurch gekennzeichnet, daß die langen Rippen (204) mit Bezug auf die Nabe (198) und die geometrische Verlängerung der kurzen Rippen (208) tangential an die Nabe herangeführt sind.

13. Erntebergungsmaschine nach den Ansprüchen 11 und 12, dadurch gekennzeichnet, daß der im Bereich des Außenumfangs liegende Teil der langen Rippe (212, 168) mit Bezug auf die Drehrichtung des Abstreifelementes (44) entweder nach vorne oder nach hinten abgewinkelt ist.

14. Erntebergungsmaschine nach den Ansprüchen 10 bis 13, dadurch gekennzeichnet, daß mit Bezug auf die Drehrichtung des Abstreifelementes (44) und die durch die Achse verlaufende Längsebene die kurzen Rippen (208) nach vorne und die langen Rippen (204) nach hinten geneigt verlaufend angeordnet sind.

15. Erntebergungsmaschine nach den Ansprüchen 10 bis 14, dadurch gekennzeichnet, daß zwei auf einer durch die Welle (52) verlaufenden Längsebene liegende kurze Rippen (208) mit Bezug auf die Drehrichtung des Abstreifelementes (44) nach vorne oder nach hinten V-förmig verlaufend angeordnet sind.

16. Erntebergungsmaschine nach einem oder mehreren der vorherigen Ansprüche, dadurch gekennzeichnet, daß der Außenumfang der Radscheibe (200) jeweils zwischen zwei nebeneinander liegenden Rippen (204, 208) durch eine geradlinig verlaufende Kante (202) gebildet ist.

17. Erntebergungsmaschine nach einem oder mehreren der vorherigen Ansprüche, dadurch gekennzeichnet, daß die Oberfläche der Rippen (168) mit der Radscheibe (166) einen rechten Winkel bildet.

18. Erntebergungsmaschine nach einem oder mehreren der vorherigen Ansprüche, dadurch gekennzeichnet, daß die Abstreifelemente (44) einzeln oder gemeinsam in Gruppen mittels der Welle (52) vertikal schwenkbar gelagert sind und die Schwenkbewegung der Abstreifelemente mittels eines zugmitteltriebs der Antriebsvorrichtung für die Abstreifelemente begrenzt werden kann.

**Claims**

1. Harvesting machine with a stripping rotor (50) provided on a harvesting device (22) for stripping or separating crop material from at least the upper portion of the standing corn (98), with a horizontally extending shaft (52) on which are disposed adjacent to each other numerous disc-like stripping elements (44) which consist of a wheel disc (158) arranged centrally and radially on a hub (154), on both sides of which wheel disc are disposed numerous ribs (160) which protrude axially from the wheel disc and extend from the hub (154) to the outer circumference of the wheel disc, the outer edges (172) of the ribs starting from the outer circumference of the wheel disc and extending in the direction of the shaft in order to form a V-shaped holding slot with adjacent ribs of an adjoining wheel disc, characterised in that each rib (160) comprises an edge which extends from its outer edge parallel to the wheel disc and which is set back from the face of the hub so as to form, with the associated edge of the rib on the adjacent wheel disc, a gap which extends as far as the hub of the wheel disc and serves to receive the stalks of crop material and prevents the ears containing the grain or seed or the grain itself from being moved back through the gap.

2. Harvesting machine according to claim 1, characterised in that the edges (162) of two ribs (160) disposed on a transverse plane on the wheel disc (158) extend parallel, starting from the hub (154).

3. Harvesting machine according to claim 2, characterised in that the ribs (160) are arranged with approximately equal spacing on the wheel disc (158), and the rib on one side of the wheel disc lies on the same axially extending transverse plane as the rib on the other side of the wheel disc.

4. Harvesting machine according to one or more of the preceding claims, characterised in that the ribs (160) of one wheel disc (158) are offset by a few degrees from the adjacent rib on the next wheel disc.

5. Harvesting machine according to one or more of the preceding claims, characterised in that at least the wheel disc (158) of the stripping element (44) is made of an elastomeric, for example rubber-like material.

6. Harvesting machine according to one or more of the preceding claims, characterised in that each rib (186) consists of a radially extending portion adjoining the hub (164) and an angled or more or less hook-shaped portion (172).

7. Harvesting machine according to claim 6, characterised in that the radially extending portion and the angled portion of the rib (194) form an obtuse angle which is open in the direction of rotation.

8. Harvesting machine according to claims 6 and 7, characterised in that the radially extending portion and the adjoining angled portion (188) of the rib (186) form an obtuse angle which is open in the direction opposite the direction of rotation.

9. Harvesting machine according to one or more of the preceding claims, characterised in that the wheel disc (192) comprises at its outer circumference, between the individual ribs (194), saw-like indentations (196).

10. Harvesting machine according to one or more of the preceding claims, characterised in that in addition, on both sides of the wheel disc (200) are disposed short ribs (208) which at one end extend to the outer circumference of the wheel disc and at the other end are spaced apart from the hub (198).

11. Harvesting machine according to claim 10, characterised in that short and long ribs (208, 204) are arranged alternately on the wheel disc (200), the long rib (204) extending between the outer circumference and the hub (198) of the wheel disc (200).

12. Harvesting machine according to claim 10, characterised in that the long ribs (204) relative to the hub (198) and the geometrical extension of the short ribs (208) extend tangentially to the hub.

13. Harvesting machine according to claims 11 and 12, characterised in that the portion of the long rib (212, 168) located in the region of the outer circumference is angled either forwardly or rearwardly relative to the direction of rotation of the stripping element (44).

14. Harvesting machine according to claims 10 to 13, characterised in that in relation to the direction of rotation of the stripping element (44) and the longitudinal plane passing through the axis, the short ribs (208) are inclined forwards and the long ribs (204) rearwards.

15. Harvesting machine according to claims 10 to 14, characterised in that two short ribs (208) located on a longitudinal plane passing through the shaft (52) extend forwards or rearwards in a V-shape relative to the direction of rotation of the stripping element (44).

16. Harvesting machine according to one or more of the preceding claims, characterised in that the outer circumference of the wheel disc (200) is in each case formed between two adjacent ribs (204, 208) by a rectilinear edge (202).

17. Harvesting machine according to one or more of the preceding claims, characterised in that the surface of the ribs (168) forms with the wheel disc (166) a right angle.

18. Harvesting machine according to one or more of the preceding claims, characterised in that the stripping elements (44) are mounted vertically pivotably individually or together in groups by means of the shaft (52), and the pivot motion of the stripping elements can be limited by means of a traction mechanism of the drive apparatus for the stripping elements.

## Revendications

1. Machine de récolte comportant un rotor détacheur (50) prévu sur un ensemble de récolte (22), pour détacher ou retirer des produits de récolte d'au moins la partie supérieure des céréales sur pied (98), comportant un arbre (52) dirigé horizontalement, sur lequel de nombreux éléments détacheurs (44) en forme de disques sont placés dans des positions contigues, éléments qui sont formés d'un disque de roue (158) disposé centralement et radialement sur un moyeu (154) sur lequel disque sont placées des deux côtés de nombreuses nervures (160) qui partent axialement du disque de roue et s'étendent du moyeu (154) jusqu'à la périphérie extérieure du disque de roue, les bords extérieurs (172) des nervures s'étendant en direction de l'arbre à partir de la périphérie extérieure du disque de roue, pour former une fente de réception en V avec des nervures voisines d'un disque de roue contigu, caractérisée en ce que chaque nervure (160) comporte un bord partant de son bord extérieur, s'étendant parallèlement au disque de roue, qui est en retrait par rapport à la surface frontale du moyeu, de sorte qu'il forme avec le bord correspondant de la nervure sur le disque de roue voisin un intervalle qui va jusqu'au moyeu de disque de roue et sert à la réception des tiges des produits de récolte, et empêche que les épis contenant les produits de récolte ou les graines, ou les produits de récolte reviennent par la fente.

2. Machine de récolte suivant la revendication 1, caractérisée en ce que les bords (162) de deux nervures (160) disposées sur un plan transversal sur le disque de roue (158) sont dirigées parallèlement à partir du moyeu (154).

3. Machine de récolte suivant la revendication 2, caractérisée en ce que les nervures (160) sont disposées approximativement à même distance sur le disque de roue (158), et en ce que la nervure située d'un côté du disque de roue se trouve dans le même plan transversal dirigé axialement que la nervure située de l'autre côté du disque de roue.

4. Machine de récolte suivant une ou plusieurs des revendications précédentes, caractérisée en ce que les nervures (160) de l'un des disques de roue (158) sont décalées de quelques degrés angulaires par rapport à la nervure voisine située sur le disque de roue immédiatement voisin.

5. Machine de récolte suivant une ou plusieurs des revendications précédentes, caractérisée en ce qu'au moins le disque de roue (158) de l'élément détacheur (44) est constitué par une matière élastomère, par exemple caoutchouteuse.

6. Machine de récolte suivant une ou plusieurs des revendications précédentes, caractérisée en ce que chaque nervure (186) est constituée par une partie s'étendant radialement, se raccordant au moyeu (164), et une partie (172) coudée ou sensiblement en forme de crochet.

7. Machine de récolte suivant la revendication 6, caractérisée en ce que la partie s'étendant radialement et la partie coudée de la nervure (194) font un angle obtus ouvert dans le sens de rotation.

8. Machine de récolte suivant les revendications 6 et 7, caractérisée en ce que la partie dirigée radialement de la nervure (186) et la partie coudée (188) de cette nervure qui s'y raccorde font un angle obtus ouvert à l'opposé du sens de rotation.

9. Machine de récolte suivant une ou plusieurs des revendications précédentes, caractérisée en ce que le disque de roue (192) comporte à sa périphérie extérieure des creux (196) en dents de scie entre les nervures (194) individuelles.

10. Machine de récolte suivant une ou plusieurs des revendications précédentes, caractérisée en

**0 162 431**

ce que des nervures courtes supplémentaires (208) sont placées des deux côtés sur le disque de roue (200), lesquelles nervures atteignent, par l'une de leurs extrémités, la périphérie extérieure du disque de roue et sont placées à distance du moyeu (198) par leur autre extrémité.

11. Machine de récolte suivant la revendication 10, caractérisée en ce qu'une nervure courte et une nervure longue (208, 204) sont placées alternativement sur le disque de roue (200), la nervure longue (204) s'étendant entre la périphérie extérieure et le moyeu (198) du disque de roue (200).

12. Machine de récolte suivant la revendication 10, caractérisée en ce que les nervures longues (204) et le prolongement géométrique des nervures courtes (208) rejoignent tangentiellement le moyeu par rapport au moyeu (198).

13. Machine de récolte suivant l'une des revendications 11 et 12, caractérisée en ce que la partie de la nervure longue (212, 168) située dans la zone de la périphérie extérieure est décalée angulairement vers l'avant ou vers l'arrière par rapport au sens de rotation de l'élément détacheur (44).

14. Machine de récolte suivant les revendications 10 à 13, caractérisée en ce que, par rapport au sens de rotation de l'élément détacheur (44) et au plan longitudinal passant par l'axe, les nervures courtes (208) sont disposées de façon à être inclinées vers l'avant et les nervures longues (204) vers l'arrière.

15. Machine de récolte suivant les revendications 10 à 14, caractérisée en ce que deux nervures courtes (208) se trouvant dans un plan longitudinal passant par l'arbre (52) sont disposées de façon que leur direction forme un V vers l'avant ou vers l'arrière par rapport au sens de rotation de l'élément détacheur (44).

16. Machine de récolte suivant une ou plusieurs des revendications précédentes, caractérisée en ce que la périphérie extérieure du disque de roue (200) est formée par un bord rectiligne (202) entre les deux nervures contigues (204, 208) de chaque paire de nervures.

17. Machine de récolte suivant une ou plusieurs des revendications précédentes, caractérisée en ce que la surface des nervures (168) fait un angle droit avec le disque de roue (166).

18. Machine de récolte suivant une ou plusieurs des revendications précédentes, caractérisée en ce que les élément détacheurs (44) sont montés de façon à pouvoir pivoter verticalement individuellement ou ensemble en groupes, et le mouvement de pivotement des éléments détacheurs peut être limité au moyen d'un mécanisme de traction du dispositif d'entraînement des éléments détacheurs.

Fig. 1

0 162 431

**Fig. 2**

Fig. 3

Fig. 4

Fig. 5

0 162 431

**Fig. 7**

172 168 166 170 164

166 173 172 168 7 165 165 164 7 212

**Fig. 6**

**Fig. 8**

180
176
178

**Fig. 9**

188
184
186
182
212

**Fig. 10**

196

195

194

190

192

**Fig. 13**

200

208

**Fig. 12**

206  204  210  202  198

**200**

13
210
202
208
212
13
206  204
198

**Fig. 11**

Fig. 15

Fig. 14